# FASCICULE DE BREVET EUROPEEN

(11) **EP 1 681 126 B1**
(45) Date de publication et mention de la délivrance du brevet: **31.12.2008**
(21) Numéro de dépôt: 05301098.9
(22) Date de dépôt: 22.12.2005
(51) Int. Cl.: B23K 26/06

(54) **Coupage laser avec lentille à double focale de pièces métalliques de faible épaisseur**
Laserschneiden von dünnschichtigen metallischen Werkstücken mit einer Linse mit zwei Brennweiten
Laser cutting of low thickness metallic workpiece with a dual-focal lense

(30) Priorité: 12.01.2005 FR 0550103
(43) Date de publication de la demande: 19.07.2006
(73) Titulaire: L'AIR LIQUIDE, Société Anonyme pour l'Etude et l'Exploitation des Procédés Georges Claude, 75007 Paris (FR)
(72) Inventeur: Bertez, Christophe, 95490, Vaureal (FR); Chouf, Karim, 92300, Levallois Perret (FR); Maazaoui, Hakim, 95800, Cergy Pontoise (FR)
(74) Mandataire: Pittis, Olivier

(56) Documents cités:
- WO-A-98/14302
- WO-A-03/018246
- DE-A1- 4 034 745
- US-A1- 2001 019 044

## Description

L'invention concerne un procédé de coupage par faisceau laser mettant en oeuvre une lentille à double focalisation et à longueur focale choisie.

Un procédé de coupage laser met classiquement en oeuvre un faisceau laser issu, par exemple d'une machine laser de type CO₂ (λ=10,6 µm) ou YAG, lequel faisceau est focalisé par un élément optique, généralement une lentille ou un miroir, de longueur focale donnée, sur la pièce à découper. Un gaz d'assistance sous pression est habituellement injecté dans la saignée de découpe de manière à évacuer le métal fondu. La saignée de coupe est alors créée par déplacement relatif, par rapport à la pièce à couper, de la tête de coupe comprenant l'élément de focalisation délivrant le faisceau et délivrant le gaz d'assistance.

Les optiques de focalisation transmissives, c'est-à-dire les lentilles, sont les éléments les plus utilisés pour la découpe laser, car elles permettent de créer une cavité étanche sous pression dans la tête découpe dans laquelle le gaz d'assistance peut être injecté et sortir ensuite par une tuyère coaxiale au faisceau laser.

Une lentille de focalisation comporte deux dioptres ou faces, sur lesquels est déposé un traitement anti-réfléchissant destiné à limiter les pertes de puissance par réflexion.

Le matériau du « coeur »de la lentille est souvent du séléniure de zinc pour les lasers de type CO₂ et de la silice fondu, du verre (bk7), du quartz ou analogue pour les lasers de type YAG.

Actuellement, les différentes formes de lentille principalement utilisées sont :
- les lentilles plan-convexe composées d'un dioptre sphérique et d'un dioptre plan,
- les lentilles ménisques composées de deux dioptres sphériques. Cette forme de lentille a l'avantage de minimiser les aberrations de sphéricité par rapport aux lentilles plan-convexe et, est pour cette raison, très largement utilisée en découpe laser.
- les lentilles asphériques, pour lesquelles la forme du premier dioptre n'est plus une sphère de rayon constant mais est optimisée de manière à réduire encore les aberrations géométriques par rapport à la lentille ménisque à dioptres sphériques et obtenir ainsi des plus grandes densités de puissance au point de focalisation, en particulier dans le cas des longueurs focales courtes, c'est-à-dire inférieures à 95,25 mm (3,75"). Le dioptre de sortie des lentilles asphériques est généralement plan pour réduire leur coût de fabrication.

Toutes ces lentilles tendent à focaliser le faisceau laser en un point de focalisation unique de taille minimale.

Un procédé de découpe laser utilisant une optique à plusieurs points de focalisation améliorant les performances du procédé de découpe laser est enseigné notamment par le document WO-A-98/14302. La forme de cette optique, qui est de type lentille ou miroir, est telle que le faisceau incident n'est plus focalisé en un seul point mais en deux ou davantage de points de focalisation, via une lentille à double ou multi-focale.

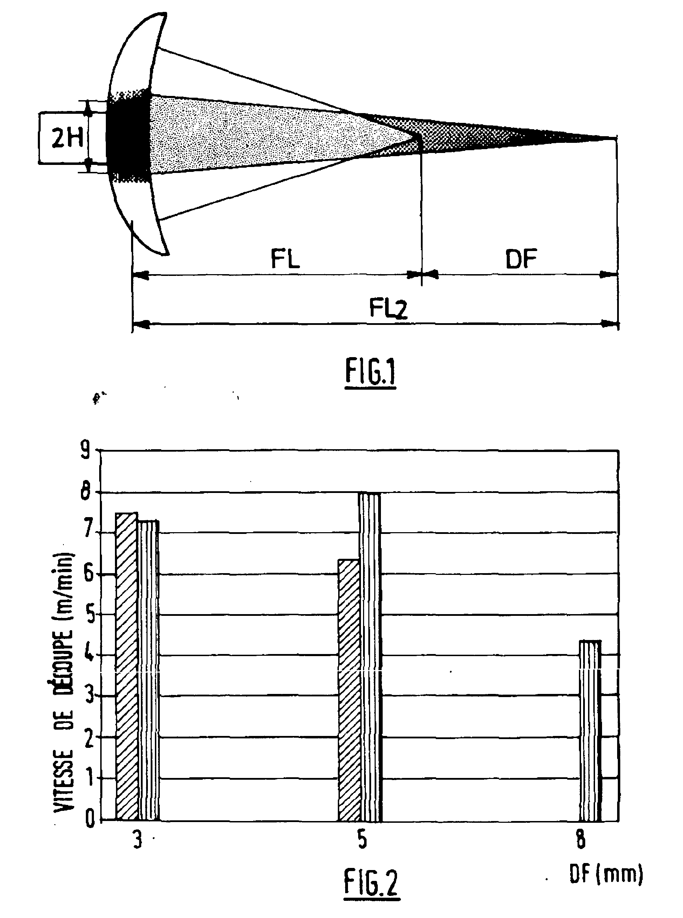

Plus précisément, lorsqu'on utilise une lentille LF à double focale pour focaliser un faisceau laser, la partie du faisceau incident située à extérieur d'un diamètre égal à 2H, comme représenté en Figure 1, est focalisée en un premier point focal PF1 situé à une longueur focale principale FL. La partie du faisceau laser L incident située à l'intérieur du diamètre égal à 2H est, quant à elle, focalisée en un deuxième point focal PF2 situé à une distance DF après le premier point focal PF1 dans le sens de la propagation de la lumière. Cette lentille de focalisation LF à double point de focalisation est réalisée avec un rayon de courbure d'un des dioptres, celui de la face convexe par exemple, différent à l'intérieur et à l'extérieur du diamètre 2H.

Ce type d'optique de focalisation permet d'obtenir des gains de vitesse, de qualité de coupe et de tolérance par rapport aux variations de la distance entre la lentille et la pièce et permet aussi de couper des matériaux plus épais que les lentilles conventionnelles à un seul point de focalisation.

Malgré l'enseignement de ce document, on a constaté en pratique qu'obtenir une découpe efficace et de qualité pour certaines épaisseurs à couper pouvait poser problème.

Par ailleurs, le document WO-A-03/018246 décrit un procédé de découpe par laser utilisant une lentille à plusieurs focales en association avec une tuyère de type convergente/divergente.

En outre, le document DE-A-4034745 enseigne un procédé de coupage par laser basé sur une focalisation dynamique du faisceau en deux points de focalisation alternatifs.

Ainsi, un problème récurrent se pose lors du coupage de plaques ou pièces métalliques ayant une épaisseur inférieure à 5 mm, de préférence comprise entre 0.5 mm et 3 mm, pour lesquelles on a constaté qu'il était nécessaire de prendre des lentilles de longueurs focales courtes (≤130mm) pour obtenir des performances de coupe acceptables.

Généralement ces épaisseurs se découpent avec des focales standardisées de 127mm (5 pouces) ou 95.25mm (3.75 pouces).

Avec des focales plus longues, il est nécessaire de ralentir les vitesses de découpe de manière significatives pour obtenir de bonnes quantités de coupe.

Le but de la présente invention est de proposer une solution à ce problème, c'est-à-dire de proposer un procédé de découpe par laser avec lentille à double focale efficace de pièces ayant une épaisseur inférieure à 5 mm, de préférence comprise entre 2 et 5 mm.

La solution de l'invention est un procédé de découpage par faisceau laser d'une pièce métallique ayant une épaisseur inférieure à 5 mm, dans lequel on met en oeuvre une lentille à double focalisation permettant de focaliser le faisceau laser en au moins un premier PF1 et un deuxième PF2 point de focalisation distincts l'un de l'autre, et situés sur l'axe du faisceau, la lentille présentant une partie centrale de diamètre 2H présentant un rayon de courbure différent de celui de la partie extérieure périphérique de la lentille, la partie du faisceau incident située à l'extérieur du diamètre 2H étant focalisée au premier point focal PF1 situé à une longueur focale FL et la partie du faisceau incident située à l'intérieur du diamètre 2H étant focalisée en un second point focal PF2 situé à une distance DF après le premier point de focalisation PF1 dans le sens de la propagation de la lumière, caractérisé en ce que la longueur focale FL est comprise entre 80 et 135 mm, et ledit diamètre 2H est inférieur à 20 mm.

Selon le cas, le procédé de l'invention peut comprendre l'une ou plusieurs des caractéristiques suivantes :
- la lentille présente une longueur focale comprise entre 90 et 130 mm, de préférence d'au moins 100 mm.
- la lentille présente une longueur focale égale à 127 mm.
- le diamètre de la lentille est compris entre 4 et 15 mm.
- découpe une pièce ayant une épaisseur comprise entre 1 et 4 mm.
- la distance entre les deux points de focalisation est comprise entre 1 et 12 mm.
- la distance entre les deux points de focalisation est comprise entre 3 et 5 mm
- la pièce métallique est en acier inoxydable, en acier doux, en aluminium ou en alliage d'aluminium, en titane ou alliage de titane, en cuivre ou alliage de cuivre.
- on met en oeuvre un gaz d'assistance contenant de l'azote.
- le faisceau laser à une puissance comprise entre 0,5 et 15 kW, de préférence entre 1 kW et 6 kW.
- le faisceau laser est émis par un dispositif laser de type CO₂.

Dans le cadre de la présente invention, il a été mis en évidence que le processus de découpe laser avec lentille à double focale était conditionné par les paramètres de la lentille utilisée, à savoir sa longueur focale FL, son 2H et son DF, comme représenté sur la figure 1.

Le diamètre 2H de la lentille correspond au diamètre de la partie située au centre de la lentille présentant un rayon de courbure différent de celui de la partie extérieure périphérique de la lentille. La partie du faisceau incident située à l'extérieur du diamètre 2H est focalisée en un premier point focal PF1 situé à une longueur focale principale FL. La partie du faisceau incident située à l'intérieur du diamètre 2H est focalisée en un second point focal PF2 situé à une longueur focale principale FL2.

La taille du diamètre du 2H détermine la quantité d'énergie focalisée au niveau du second point de focalisation PF2.

La distance DF correspond, quant à elle, à la différence entre les longueurs focales FL et FL2, comme montré en Figure 1.

### Exemple

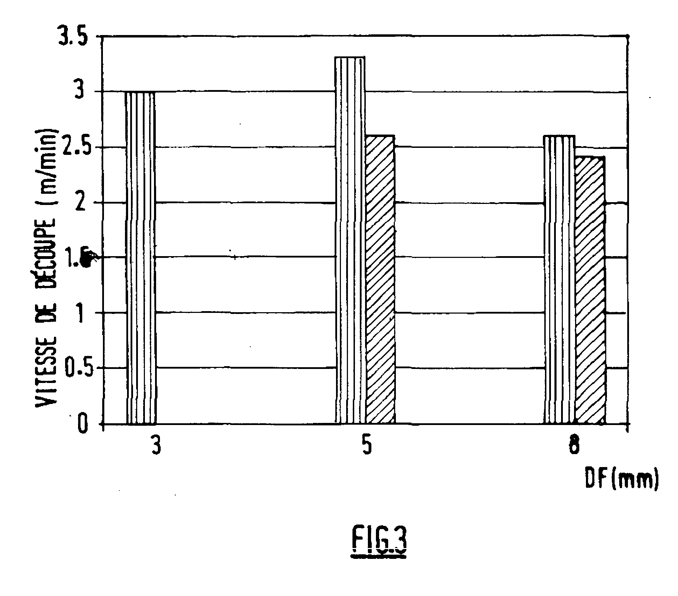

Des essais réalisés sur des pièces en acier inoxydable d'épaisseurs 2 mm et 4 mm, dont les résultats sont représentés sur les figures 2 et 3, respectivement, confirment que, pour les épaisseurs inférieures à 5 mm, c'est-à-dire généralement comprises entre 1 et 4 mm, il est souhaitable d'utiliser une lentille de longueur focale FL=127 mm et possédant des valeurs de 2H comprises entre 4 mm et 15 mm.

La valeur du diamètre 2H dans ces essais est de 8 mm, la puissance laser est de 4 kW et le gaz d'assistance est de l'azote.

En outre, dans ces essais, les résultats ont été obtenus pour des pressions de 15 bars ou 16 bars (barres grisées en figure 2 et 3, resp.) et de 19 bars (barres noircies en Fig. 2 et 3), en utilisant, dans tous les cas, une lentille à double focale.

Pour la longueur focale, FL=127 mm et les valeurs de 2H précédentes, les meilleures performances de découpe laser ont été obtenues pour des valeurs de DF compris entre 3 et 5 mm, comme visible sur ces Figures 2 et 3.

En effet, pour ces valeurs de FL, 2H et DF, la répartition énergétique d'énergie laser absorbée dans la saignée de coupe devient optimale. De plus, la largeur de saignée devient suffisante pour permettre une bonne pénétration du gaz et une évacuation du métal fondu optimale.

## Revendications

1. Procédé de découpage par faisceau laser d'une pièce métallique ayant une épaisseur inférieure à 5 mm, dans lequel on met en oeuvre une lentille à double focalisation permettant de focaliser le faisceau laser en au moins un premier (PF1) et un deuxième (PF2) point de focalisation distincts l'un de l'autre, et situés sur l'axe du faisceau, la lentille présentant une partie centrale de diamètre (2H) présentant un rayon de courbure différent de celui de la partie extérieure périphérique de la lentille, la partie du faisceau incident située à l'extérieur du diamètre (2H) étant focalisée au premier point focal (PF1) situé à une longueur focale (FL) et la partie du faisceau incident située à l'intérieur du diamètre (2H) étant focalisée en un second point focal (PF2) situé à une distance (DF) après le premier point de focalisation (PF1) dans le sens de la propagation de la lumière, **caractérisé en ce que** la longueur focale (FL) est comprise entre 80 et 135 mm, et ledit diamètre (2H) est inférieur à 20 mm.

2. Procédé selon la revendication 1, **caractérisé en ce que** la lentille présente une longueur focale (LF) comprise entre 90 et 130 mm.

3. Procédé selon la revendication 1 ou 2, **caractérisé en ce que** la lentille présente une longueur focale (LF) égale à 127 mm.

4. Procédé selon la revendication 2, **caractérisé en ce que** la lentille présente une longueur focale (LF) d'au moins 100 mm.

5. Procédé selon la revendication 1, **caractérisé en ce que** le diamètre (2H) de la lentille est.compris entre 4 et 15 mm.

6. Procédé selon l'une des revendications 1 à 5, **caractérisé en ce que** l'on découpe une pièce ayant une épaisseur comprise entre 1 et 4 mm.

7. Procédé selon l'une des revendications 1 à 6, **caractérisé en ce que** la distance (PF) entre les deux points de focalisation (PF1, PF2) est comprise entre 1 et 12 mm.

8. Procédé selon la revendication 7, **caractérisé en ce que** la distance (PF) entre les deux points de focalisation (PF1, PF2) est comprise entre 3 et 5 mm.

9. Procédé selon l'une des revendications 1 à 8, **caractérisé en ce que** la pièce métallique est en acier inoxydable, en acier doux, en aluminium ou en alliage d'aluminium, en titane ou alliage de titane, en cuivre au alliage de cuivre.

10. Procédé selon l'une des revendications 1 à 9, **caractérisé en ce qu'**on met en oeuvre un gaz d'assistance contenant de l'azote.

11. Procédé selon l'une des revendications 1 à 10, **caractérisé en ce que** le faisceau laser à une puissance comprise entre 0,5 et 15 kW, de préférence entre 1 kW et 6 kW.

12. Procédé selon l'une des revendications 1 à 11, **caractérisé en ce que** le faisceau laser est émis par un dispositif laser de type CO₂.

## Claims

1. Method for laser-beam cutting a metal workpiece having a thickness of less than 5 mm, in which a double focusing lens is employed making it possible to focus the laser beam at least at a first focusing point (PF1) and a second focusing point (PF2) which are separate from each other and lie on the beam axis, the lens having a central part of diameter (2H) having a radius of curvature different from that of the peripheral exterior part of the lens, that part of the incident beam which lies outside the diameter (2H) being focused at the first focal point (PF1) lying at a focal length (FL) and that part of the incident beam which lies inside the diameter (2H) being focused at a second focal point (PF2) lying at a distance (DF) after the first focal point (PF1) in the direction of propagation of the light, **characterized in that** the focal length (FL) is between 80 and 135 mm and the said diameter (2H) is less than 20 mm.

2. Method according to Claim 1, **characterized in that** the lens has a focal length (FL) of between 90 and 130 mm.

3. Method according to Claim 1 or 2, **characterized in that** the lens has a focal length (FL) equal to 127 mm.

4. Method according to Claim 2, **characterized in that** the lens has a focal length (FL) of at least 100 mm.

5. Method according to Claim 1, **characterized in that** the diameter (2H) of the lens is between 4 and 15 mm.

6. Method according to one of Claims 1 to 5, **characterized in that** a workpiece having a thickness lying between 1 and 4 mm is cut.

7. Method according to one of Claims 1 to 6, **characterized in that** the distance (PF) between the two focusing points (PF1, PF2) is between 1 and 12 mm.

8. Method according to Claim 7, **characterized in that** the distance (PF) between the two focusing points (PF1, PF2) is between 3 and 5 mm.

9. Method according to one of Claims 1 to 8, **characterized in that** the metal workpiece is made of stainless steel, soft steel, aluminium or aluminium alloy, titanium or titanium alloy, copper or copper alloy.

10. Method according to one of Claims 1 to 9, **characterized in that** an assisting gas containing nitrogen is used.

11. Method according to one of Claims 1 to 10, **characterized in that** the laser beam has a power of between 0.5 and 15 kW, preferably between 1 kW and 6 kW.

12. Method according to one of Claims 1 to 11, **characterized in that** the laser beam is emitted by a laser device of the CO₂ type.

## Patentansprüche

1. Verfahren zum Laserstrahlschneiden eines Metallwerkstücks mit einer Stärke kleiner als 5 mm, bei dem man eine Linse mit zwei Brennweiten einsetzt, die es erlaubt, den Laserstrahl auf mindestens einen ersten (PF1) und einen zweiten (PF2) Brennpunkt, die voneinander getrennt sind, zu fokussieren, und die auf der Achse des Strahls liegen, wobei die Linse einen zentralen Teil mit Durchmesser (2H) aufweist, der einen Krümmungsradius aufweist, der von dem des Außenumfangteils der Linse unterschiedlich ist, wobei der Teil des einfallenden Strahls, der sich außerhalb des Durchmessers (2H) befindet, auf den ersten Brennpunkt (PF1), der sich in einer Brennweite (LF) befindet, fokussiert wird, und wobei der einfallende Teil des Strahls, der sich innerhalb des Durchmessers (2H) befindet, auf einen zweiten Brennpunkt (PF2), der sich in einer Entfernung (DF) nach dem ersten Brennpunkt (PF1) in die Ausbreitungsrichtung des Lichts befindet, fokussiert wird, **dadurch gekennzeichnet, dass** die Brennweite (LF) zwischen 80 und 135 mm liegt und dass der Durchmesser (2H) kleiner als 20 mm ist.

2. Verfahren nach Anspruch 1, **dadurch gekennzeichnet, dass** die Linse eine Brennweite (LF) zwischen 90 und 130 mm aufweist.

3. Verfahren nach Anspruch 1 oder 2, **dadurch gekennzeichnet, dass** die Linse eine Brennweite (LF) gleich 127 mm aufweist.

4. Verfahren nach Anspruch 2, **dadurch gekennzeichnet, dass** die Linse eine Brennweite (LF) von mindestens 100 mm aufweist.

5. Verfahren nach Anspruch 1, **dadurch gekennzeichnet, dass** der Durchmesser (2H) der Linse zwischen 4 und 15 mm liegt.

6. Verfahren nach einem der Ansprüche 1 bis 5, **dadurch gekennzeichnet, dass** man ein Werkstück ausschneidet, das eine Stärke zwischen 1 und 4 mm hat.

7. Verfahren nach einem der Ansprüche 1 bis 6, **dadurch gekennzeichnet, dass** die Entfernung (PF) zwischen den zwei Brennpunkten (PF1, PF2) zwischen 1 und 12 mm liegt.

8. Verfahren nach Anspruch 7, **dadurch gekennzeichnet, dass** die Entfernung (PF) zwischen den zwei Brennpunkten (PF1, PF2) zwischen 3 und 5 mm liegt.

9. Verfahren nach einem der Ansprüche 1 bis 8, **dadurch gekennzeichnet, dass** das Metallwerkstück aus nichtrostendem Stahl, Flussstahl, Aluminium oder aus Aluminiumlegierung, Titan oder Titanlegierung, Kupfer oder Kupferlegierung besteht.

10. Verfahren nach einem der Ansprüche 1 bis 9, **dadurch gekennzeichnet, dass** man ein Hilfsgas, das Stickstoff enthält, umsetzt.

11. Verfahren nach einem der Ansprüche 1 bis 10, **dadurch gekennzeichnet, dass** der Laserstrahl eine Leistung zwischen 0,5 und 15 kW, vorzugsweise zwischen 1 kW und 6 kW hat.

12. Verfahren nach einem der Ansprüche 1 bis 11, **dadurch gekennzeichnet, dass** der Laserstrahl von einer Laservorrichtung des Typs CO₂ abgegeben wird.
